**Europäisches Patentamt**

**European Patent Office**

**Office européen des brevets**

(19)

(11) Numéro de publication : **0 329 514 B1**

(12)

# FASCICULE DE BREVET EUROPEEN

(45) Date de publication du fascicule du brevet :
**16.12.92 Bulletin 92/51**

(51) Int. Cl.⁵ : **H04L 25/08, B60R 16/02**

(21) Numéro de dépôt : **89400303.7**

(22) Date de dépôt : **02.02.89**

(54) **Interface de raccordement pour un système de transmission d'informations, notamment dans un véhicule automobile.**

(30) Priorité : **10.02.88 FR 8801598**

(43) Date de publication de la demande :
**23.08.89 Bulletin 89/34**

(45) Mention de la délivrance du brevet :
**16.12.92 Bulletin 92/51**

(84) Etats contractants désignés :
**DE GB IT SE**

(56) Documents cités :
**DE-A- 3 342 763**
**FR-A- 2 575 014**
**GB-A- 1 314 024**
**US-A- 3 609 662**
**US-A- 3 803 355**
**US-A- 4 165 491**
**PATENT ABSTRACTS OF JAPAN, vol. 3, no. 5 (E-84), 18 janvier 1979, page 144 E 84 & JP-A-53 132 934**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**
Titulaire : **REGIE NATIONALE DES USINES RENAULT**
**Boîte postale 103 8-10 avenue Emile Zola**
**F-92109 Boulogne-Billancourt (FR)**

(72) Inventeur : **Magne, Pierre**
**9, rue Camille Saint-Saens**
**F-92400 Courbevoie (FR)**
Inventeur : **Lecocq, Jean-Luc**
**9, rue Camille Desmoulins**
**F-92310 Sevres (FR)**

(74) Mandataire : **Polus, Camille et al**
**c/o Cabinet Lavoix 2, Place d'Estienne d'Orves**
**F-75441 Paris Cedex 09 (FR)**

## Description

La présente invention concerne les dispositifs de transmission d'informations notamment dans les véhicules automobiles et elle se rapporte plus particulièrement à une interface de raccordement d'une partie de réception d'informations d'une station dans un système de transmission d'informations en différentiel, par deux fils de transmission.

On connait déjà dans l'état de la technique, un certain nombre de systèmes de multiplexage qui permettent de relier les fonctions dites "organes de carrosserie" à une unité centrale du véhicule automobile, qui en gère le fonctionnement.

Ces organes sont reliés entre eux par deux fils de transmission d'informations qui constituent ainsi un bus de liaison.

Pour des raisons de sécurité, il est prévu que les systèmes actuels puissent fonctionner en mode dégradé, c'est à dire que le système peut fonctionner même si l'un des deux fils de transmission d'informations est relié à la masse, au potentiel de la batterie ou tout simplement coupé.

Cependant, ce type de dispositifs présente un certain nombre d'inconvénients dans la mesure où lorsqu'ils fonctionnent, il n'est pas possible de savoir s'ils fonctionnent normalement ou dans un mode dégradé.

Le document FR-A- 2 575 014 divulgue un récepteur capable de signaler un défaut sur la ligne, mais ce type de dispositif ne permet pas de détecter lequel des deux fils est défaillant.

Par ailleurs, certains dispositifs sont également équipés de liaisons capacitives qui ne permettent pas ou tout au moins très difficilement, d'utiliser des systèmes de dialogue à collision, encore appelé bus collision.

Le but de l'invention est donc de résoudre ces problèmes en proposant une interface de raccordement qui permette de détecter lequel des deux fils de transmission est défaillant et qui permette également de supprimer la liaison capacitive de certains des dispositifs de transmission connus actuellement et donc de rendre leur fonctionnement avec des bus collision possible.

A cet effet, l'invention a pour objet une interface de raccordement d'une partie de réception d'informations d'une station dans un système de transmission d'informations en différentiel, par deux fils de transmission, notamment d'un véhicule automobile, caractérisée en ce qu'elle comporte trois comparateurs, les entrées du premier comparateur étant raccordées aux deux fils de transmission d'informations, l'une des entrées du second comparateur étant raccordée à l'un des fils de transmission et l'autre entrée de ce comparateur, à un générateur de tension de polarisation, l'une des entrées du troisième comparateur étant reliée à l'autre fil de transmission et l'autre entrée de ce comparateur étant reliée au générateur de tension de polarisation, en ce que les sorties des comparateurs sont reliées à des entrées d'un multiplexeur, dont la sortie est reliée au reste des circuits de la station et en ce que les entrées de commande du multiplexeur sont reliées à la sortie de moyens de détection de défaut sur l'un des fils de transmission, de manière que ceux-ci commandent le multiplexeur pour qu'il sélectionne la sortie de l'un des comparateurs en fonction de l'état des fils de transmission d'informations.

Avantageusement, la sortie des moyens de détection de défaut est reliée à des moyens de mémorisation et/ou d'indication de défaut sur l'un des fils de transmission.

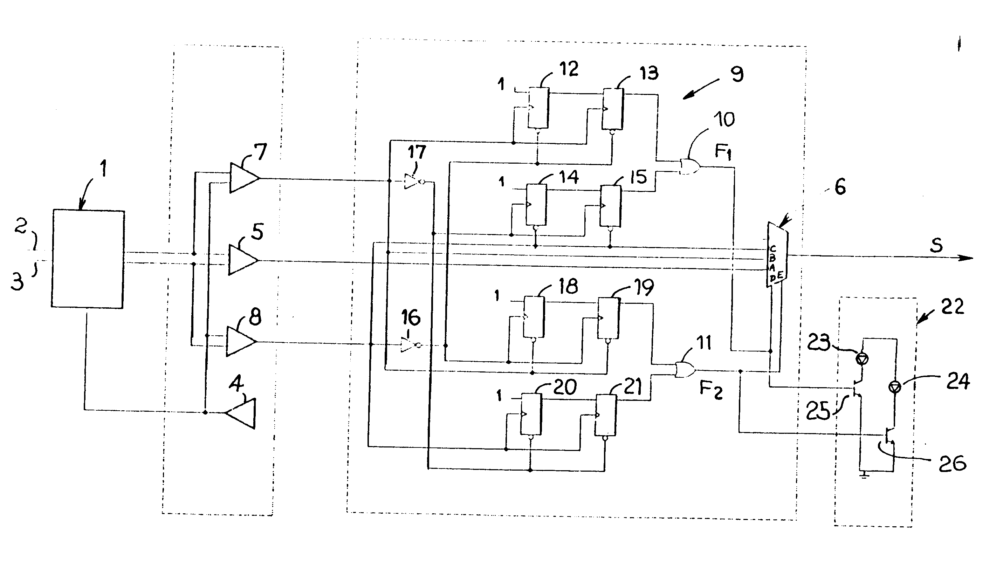

L'invention sera mieux comprise à l'aide de la description qui va suivre, donnée uniquement à titre d'exemple et faite en se référant au dessin annexé, qui représente le schéma électrique d'une interface de raccordement selon l'invention.

Ainsi qu'on peut le voir sur cette figure, l'interface de raccordement selon l'invention comporte des moyens de filtrage 1 de type connu, dont les bornes d'entrée sont raccordées à des fils de transmission d'informations 2 et 3 permettant de raccorder une partie de réception d'informations d'une station, reliée à la sortie de l'interface, à un système de transmission d'informations en différentiel par deux fils, installé par exemple dans un véhicule automobile.

Les moyens de filtrage 1 sont également reliés à la sortie d'un amplificateur de polarisation 4 délivrant une tension de polarisation à ces moyens de filtrage.

Les fils 2 et 3, après passage dans les moyens de filtrage, sont respectivement raccordés aux entrées non inverseuse et inverseuse d'un premier comparateur 5, dont la sortie est reliée à une borne d'entrée, désignée par la référence A, d'un multiplexeur 6 dont la sortie S est reliée au reste des circuits de la partie de réception de la station.

Le fil de transmission 2, à la sortie des moyens de filtrage 1, est également relié à une entrée non inverseuse d'un second comparateur 7 dont l'autre entrée, c'est à dire son entrée inverseuse, est reliée à la sortie de l'amplificateur de polarisation, de manière à être portée au potentiel de polarisation délivré par celui-ci.

La sortie de ce second comparateur 7 est également reliée directement à une entrée B du multiplexeur 6.

Le fil de transmission 3 est quant à lui relié à une entrée inverseuse d'un troisième comparateur 8 dont l'autre entrée, c'est à dire son entrée non-inverseuse, est également reliée à la sortie de l'amplificateur de polarisation 4. La sortie de ce troisième comparateur 8 est reliée directement à une entrée C des moyens de multiplexage 6.

Le multiplexeur possède également des entrées de commande D et E qui sont reliées à la sortie de moyen 9 de détection de défaut sur l'un des fils de transmission. Ces moyens de détection de défaut délivrent un mot binaire de commande du multiplexeur, pour que celui-ci sélectionne la sortie de l'un des comparateurs en fonction de l'état des fils de transmission 2 et 3, afin d'obtenir un signal de sortie non perturbé, comme cela sera décrit plus en détail par la suite.

La sortie des moyens de détection 9 peut également être reliée à des moyens de mémorisation et/ou d'indication de défaut sur l'un des fils de transmission pour permettre un diagnostic en temps réel ou en temps différé du dispositif de transmission d'informations du véhicule. Ces moyens seront décrits plus en détail par la suite.

Les entrées de commande D et E du multiplexeur sont reliées chacune à la sortie d'une porte OU 10 et 11 respectivement, dont les entrées sont reliées à des bascules montées en cascade et recevant des signaux provenant des différents comparateurs.

Ainsi par exemple, si l'on se réfère aux bascules reliées aux entrées de la porte OU 10 dont la sortie est reliée à la borne D de commande du multiplexeur, on peut constater que chaque entrée de cette porte est raccordée à deux bascules montées en cascade, respectivement 12 et 13 pour la première entrée et 14 et 15 pour la seconde entrée de cette porte.

Ces bascules sont constituées par exemple par des bascules du type D.

La bascule 12 reçoit sur l'une de ses entrées, un niveau logique 1 et sa sortie est raccordée à l'entrée de la bascule 13 dont la sortie est raccordée à l'une des entrées de la porte OU 10. Les entrées d'attaque de ces bascules reçoivent le signal de sortie du second comparateur 7, tandis que les entrées de remise à zéro de ces bascules reçoivent le signal de sortie d'un inverseur 16 dont l'entrée est reliée à la sortie du troisième comparateur 8.

Les entrées d'attaque des bascules 14 et 15 sont quant à elles reliées à la sortie d'un inverseur 17 dont l'entrée est raccordée à la sortie du second comparateur 7, tandis que les entrées de remise à zéro de ces bascules 14 et 15 sont raccordées à la sortie du troisième comparateur 8. L'entrée de la bascule 14 est raccordée à un niveau 1 logique, sa sortie étant raccordée à l'entrée de la bascule 15 dont la sortie est raccordée à l'autre entrée de la porte OU 10.

On peut donc constater que ces deux paires de bascules, en parallèle, fonctionnent à partir de signaux inverses dérivés des signaux de sortie des comparateurs 7 et 8.

L'entrée de commande E du multiplexeur est quant à elle raccordée à la sortie d'une porte OU 11 dont les entrées sont également raccordées à deux paires de bascules D montées en cascade et référencées respectivement 18,19 et 20,21. Ces paires de bascules sont également connectées en parallèle sur les entrées de la partie OU 11.

Les entrées d'attaque des bascules 18 et 19 sont raccordées à la sortie de l'inverseur 16, tandis que les entrées de remise à zéro de ces bascules sont raccordées directement à la sortie du second comparateur 7.

Les entrées d'attaque des bascules 20 et 21 sont quant à elles raccordées directement à la sortie du troisième comparateur 8, tandis que les entrées de remise à zéro de ces bascules sont raccordées à la sortie de l'inverseur 17. Les autres entrées des bascules 18 et 20 sont reliées à un niveau 1 logique, leurs sorties étant raccordées aux entrées des bascules 19 et 21 dont les sorties sont raccordées aux entrées de la porte OU 11. On conçoit également que les paires de bascules 18,19 et 20, 21 respectivement, fonctionnent à partir de signaux inversés dérivés des signaux de sortie des comparateurs 7 et 8.

Les moyens de détection de défaut comportent donc quatre paires de deux bascules en cascade, connectées en parallèle deux à deux, chaque bascule de chaque paire recevant des signaux d'attaque et de remise à zéro inversés par rapport à ceux reçus par la bascule correspondante de la paire associée.

Il apparaît donc que le fonctionnement d'un tel circuit permet de détecter une défaillance sur l'un ou l'autre des fils de transmission 2 ou 3, dans la mesure où les signaux d'attaque des bascules sont constitués par des signaux (directs ou inversés) circulant sur l'un des fils tandis que les signaux de remise à zéro de ces bascules sont constitués par des signaux (directs ou inversés) circulant sur l'autre fil.

Dans la mesure où le dispositif fonctionne de manière normale, c'est à dire en différentiel, on retrouve donc sur les fils 2 et 3 deux signaux inversés l'un par rapport à l'autre. Les signaux circulant sur l'un des fils servent à attaquer les bascules, tandis que les signaux circulant sur l'autre fil servent à remettre celles-ci à zéro.

En cas de défaut de transmission sur l'un ou l'autre des fils de transmission, les bascules correspondantes ne sont pas remises à zéro et on retrouve donc en sortie des paires de bascules concernées, un niveau logique 1 qui se retrouve également à la sortie des bascules 10 ou 11, c'est à dire en F1 ou en F2, ces sorties étant raccordées aux entrées de commande D et E du multiplexeur 6 pour amener celui-ci à sélectionner la sortie de l'un des comparateurs en fonction de l'état des fils de transmission.

3

EP 0 329 514 B1

Le tableau suivant illustre les différentes possibilités de fonctionnement de l'interface selon l'invention.

```
F 1 = 0      F 2 = 0    Pas de
                        défaut       ----> le résultat du pre-
D  = 0       E  = 0                  mier comparateur 5
                                     se retrouve en
                                     sortie du multi-
                                     plexeur

F 1 = 0      F 2 = 1    défaut sur ----> le résultat du
                        fil 2             troisième compara-
D  = 0       E  = 1                       teur 8 se retrouve
                                          en sortie du
                                          multiplexeur

F 1 = 1      F 2 = 0    défaut sur ----> le résultat du se-
                        fil 3            cond comparateur 7
D  = 1       E  = 0                      se retrouve en sor-
                                         tie du multiplexeur
```

On voit donc apparaître à la lueur de ce tableau que lorsque deux signaux inversés circulent sur les lignes 2 et 3, ils se neutralisent mutuellement, de manière qu'en sortie des bascules 10 et 11, on retrouve un mot binaire 00, ce mot binaire attaquant le multiplexeur pour que celui-ci connecte sa borne d'entrée A à sa sortie S de manière à délivrer en sortie vers le reste des circuits de la station, le signal de sortie du comparateur 5.

Par contre, en cas de défaut sur le fil 2, la sortie F2 de la porte 11 passe à 1, et le mot binaire 01 est donc appliqué aux entrées D,E du multiplexeur 6, de manière que celui-ci raccorde son entrée C à sa sortie de manière à sélectionner la sortie du troisième comparateur 8.

En cas de défaut sur le fil 3, la sortie F1 de la porte 10 passe à 1 et le mot binaire 1 0 est appliqué aux entrées de commande D,E du multiplexeur, de manière que celui-ci raccorde son entrée B à sa sortie et sélectionne ainsi la sortie du second comparateur 7.

Les signaux présente en sortie des comparateurs 7 et 8 représentent les signaux circulant sur les fils 2 et 3 respectivement, ces signaux ne pouvant pas être perturbés par des défauts éventuels sur l'autre fil en raison de la séparation de l'analyse de ceux-ci dans deux comparateurs différents attaqués par une tension de polarisation.

Afin de faciliter le diagnostic et la réparation du dispositif de transmission du véhicule lorsque celui-ci présente des défauts, des moyens d'indication de défaut 22 peuvent également être connectés à la sortie des moyens de détection de défaut 9. Ces moyens d'indication de défaut 22 peuvent comprendre deux lampes 23 et 24 raccordées dans les circuits de collecteur de transistors 25, 26 dont les bases sont reliées respectivement à la sortie F1 de la porte OU 10 et à la sortie F2 de la porte OU 11.

Ces lampes permettent d'indiquer l'existence d'un défaut sur l'un ou l'autre des fils de transmission par exemple à un utilisateur de véhicule ou à une personne chargée de son entretien. Il va de soi que ces moyens d'indication peuvent également être remplacés par des moyens de mémorisation de défaut, ces moyens de mémorisation pouvant être lus par des équipements de diagnostic appropriés.

**Revendications**

1.  Interface de raccordement d'une partie de réception d'informations d'une station dans un système de transmission d'informations en différentiel, par deux fils de transmission, notamment d'un véhicule automobile, caractérisée en ce qu'elle comporte trois comparateurs (5,7,8), les entrées du premier comparateur (5) étant raccordées aux deux fils de transmission (2,3), l'une des entrées du second comparateur (7) étant raccordée à l'un des fils de transmission (2) et l'autre entrée de ce comparateur, à un générateur (4) tension de polarisation, l'une des entrées du troisième comparateur (8) étant reliée à l'autre fil de transmission (3) et l'autre entrée de ce comparateur au générateur (4) de la tension de polarisation, en ce que les sorties des comparateurs (5,7, 8) sont reliées à des entrées (A,B,C) d'un multiplexeur (6) dont la sortie (S) est reliée au reste des circuits de la station, et en ce que les entrées de commande (D,E) du multiplexeur (6) sont reliées à la sortie de moyens de détection de défaut (9) sur l'un des fils de transmission,

4

de manière que ceux-ci commandent le multiplexeur (6) qu'il sélectionne la sortie de l'un des comparateurs (5,7,8) en fonction de l'état des fils de transmission (2,3).

2. Interface de raccordement selon la revendication 1, caractérisée en ce que la sortie des moyens de détection (9) de défaut est raccordée à des moyens de mémorisation et/ou d'indication (22) de défaut sur l'un des fils de transmission.

3. Interface de raccordement selon la revendication 1 ou 2, caractérisée en ce que les moyens de détection de défaut (9) comprennent une première paire de bascules (12,13) montées en cascade et raccordées à l'une des entrées de commande (D) du multiplexeur (6), les entrées d'attaque de ces bascules (12,13) étant reliées à la sortie du second comparateur (7), tandis que les entrées de remise à zéro de ces bascules sont raccordées à la sortie d'un inverseur (16) dont l'entrée est raccordée à la sortie du troisième comparateur (8), et une seconde paire de bascules (20,21) montées en cascade et raccordées à l'autre borne de commande (E) du multiplexeur (6), les entrées d'attaque de ces bascules (20,21) étant raccordées à la sortie du troisième comparateur (8) tandis que les entrées de remise à zéro de ces bascules sont raccordées à la sortie d'un inverseur (17) dont l'entrée est raccordée à la sortie du second comparateur (7).

4. Interface de raccordement selon la revendication 3, caractérisée en ce que les moyens de détection de défauts (9) comprennent des troisième et quatrième paires de bascules en cascade (14,15,18,19), connectées respectivement en parallèle sur les première et seconde paires de bascules, et recevant sur leurs entrées d'attaque et de remise à zéro respectivement de signaux inversés par rapport à ceux reçus par les entrées correspondantes de la paire de bascules à laquelle chacune d'elle est associée.

5. Interface de raccordement selon la revendication 4, caractérisée en ce que les sorties des paires de bascules associées sont raccordées aux entrées d'une porte OU (10, 11) dont la sortie est raccordée à une entrée de commande (D,E) du multiplexeur (6).

6. Interface de raccordement selon l'une quelconque des revendications 2 à 5, caractérisée en ce que les moyens de mémorisation et/ou d'indication de défauts (22) comprennent des lampes (23,24) raccordées dans le circuit de collecteur de transistors (25,26) dont les bases sont raccordées aux entrées de commande du multiplexeur de manière à indiquer l'existence d'un défaut sur l'un et/ou l'autre des fils de transmission.

## Patentansprüche

1. Verbindungsschnittstelle eines Informationsempfangsteils einer Station in einem System für differentielle Informationsübertragung durch zwei Übertragungsdrähte, insbesondere eines Automobils,
dadurch **gekenzeichnet**,
daß sie drei Komparatoren (5, 7, 8) aufweist, wobei die Eingänge des ersten Komparators (5) mit den beiden Übertragungsdrähten (2, 3) verbunden sind, wobei der eine Eingang des zweiten Komparators (7) mit einem der Übertragungsdrähte (2) und der andere Eingang dieses Komparators mit einem Polarisationsspannungs-Generator (4) verbunden ist, wobei der eine Eingang des dritten Komparators (8) mit dem anderen Übertragungsdraht (3) und der andere Eingang dieses Komparators mit dem Polarisationsspannungs-Generator (4) verbunden ist, daß die Ausgänge der Komparatoren (5, 7, 8) mit den Eingängen (A, B, C) eines Multiplexers (6) verbunden sind, dessen Ausgang (S) mit den verbleibenden Schaltkreisen der Station verbunden ist, und daß die Steuereingänge (D, E) des Multiplexers (6) mit dem Ausgang von Fehlererfassungseinrichtungen (9) auf einem der Übertragungsdrähte verbunden sind, so daß diese den Multiplexer (6) steuern, damit er den Ausgang eines der Komparatoren (5, 7, 8) in Abhängigkeit von dem Zustand der Übertragungsdrähte (2, 3) auswählt.

2. Verbindungsschnittstelle nach Anspruch 1, dadurch gekennzeichnet, daß der Ausgang der Fehlererfassungseinrichtungen (9) mit Speicher- und/oder Fehleranzeige-(22)-Einrichtungen auf einem der Übertragungsdrähte verbunden ist.

3. Verbindungsschnittstelle nach Anspruch 1 oder 2, dadurch gekennzeichnet, daß die Fehlererfassungseinrichtungen (9) ein erstes Paar von Kippschaltungen (12, 13) aufweisen, die kaskadenförmig geschaltet und mit einem der Steuereingänge (D) des Multiplexers (6) verbunden sind, wobei die Ansteuereingänge dieser Kippschaltungen (12, 13) mit dem Ausgang des zweiten Komparators (7) verbunden sind, während die Null-Rücksetzeingänge dieser Kippschaltungen mit dem Ausgang eines Invertes (16) verbunden sind, dessen Eingang mit dem Ausgang des dritten Komparators (8) verbunden ist, und ein zweites Paar von Kippschaltungen (20, 21), die kaskadenförmig geschaltet und mit dem anderen Steueranschluß (E) des Multiplexers (6) verbunden sind, wobei die Ansteuereingänge dieser Kippschaltungen (20, 21) mit dem Ausgang des dritten Komparators (8) verbunden sind, während die Null-Rücksetzeingänge dieser Kippschaltungen mit dem Ausgang eines Inverters (17) verbunden sind, dessen Eingang mit dem Ausgang des zweiten Komparators (7) verbunden ist.

4. Verbindungsschnittstelle nach Anspruch 3, dadurch gekennzeichnet, daß die Fehlererfassungseinrichtungen (9) dritte und vierte Paare von kaskadenartigen Kippschaltungen (14, 15, 18, 19) aufweisen, die jeweils parallel zu dem ersten und zweiten Paar von Kippschaltungen angeschlossen sind und an ihren Ansteuer- und Null-Rücksetzeingängen jeweils Signale empfangen, welche invertiert sind bezüglich derjenigen, die durch die entsprechenden Eingänge des Paares von Kippschaltungen empfangen werden, dem jedes von ihnen zugeordnet ist.

5. Verbindungsschnittstelle nach Anspruch 4, dadurch gekennzeichnet, daß die Ausgänge der Paare zugeordneter Kippschaltungen mit den Eingängen eines ODER-Gatters (10, 11) verbunden sind, deren Ausgang mit einem Steuereingang (D, E) des Multiplexers (6) verbunden ist.

6. Vebindungsschnittstelle nach einem der Ansprüche 2 bis 5, dadurch gekennzeichnet, daß die Speicher- und/oder Fehlererkennungs-(22)-Einrichtungen Leuchten (23, 24) aufweisen, die in den Kollektorschaltkreis von Transistoren (25, 26) geschaltet sind, deren Basen mit den Steuereingängen des Multiplexers derart verbunden sind, daß sie das Vorhandensein eines Fehlers auf dem einen und/oder dem anderen der Übertragungsdrähte anzeigen.

## Claims

1. Connection interface of an information receiving part of a station in a differential information transmission system by means of two transmission lines, in particular of a motor vehicle, characterised in that it comprises three comparators (5, 7, 8), the inputs of the first comparator (5) being connected to the two transmission lines (2, 3), one of the inputs of the second comparator (7) being connected to one (2) of the transmission lines and the other input of this comparator to a bias voltage generator (4), one of the inputs of the third comparator (8) being connected to the other transmission line (3) and the other input of this comparator to the bias voltage generator (4), in that the outputs of the comparators (5, 7, 8) are connected to inputs (A, B, C) of a multiplexer (6) whose output (S) is connected to the remainder of the circuits of the station, and in that the control inputs (D, E) of the multiplexer (6) are connected to the output of means (9) for detecting a defect on one of the transmission lines, so that the transmission lines control the multiplexer (6) so that it selects the output of one of the comparators (5, 7, 8) in dependence upon the state of the transmission lines (2, 3).

2. Connection interface according to claim 1, characterised in that the output of the defect detection means (9) is connected to storage means and/or means (22) for indicating a defect on one of the transmission lines.

3. Connection interface according to claim 1 or 2, characterised in that the defect detection means (9) comprise a first pair of flip-flops (12, 13) corrected in cascade and connected to one of the control inputs (D) of the multiplexer (6), the driving inputs of these flip-flops (12, 13) being connected to the output of the second comparator (7), while the resetting inputs of these flip-flops are connected to the output of an inverter (16) whose input is connected to the output of the third comparator (8), and a second pair of flip-flops (20, 21) connected in cascade and connected to the other control terminal (E) of the multiplexer (6), the driving inputs of these flip-flops (20, 21) being connected to the output of the third comparator (8), while the resetting inputs of these flip-flops are connected to the output of an inverter (17) whose input is connected to the output of the second comparator (7).

4. Connection interface according to claim 3, characterised in that the defect detection means (9) comprise third and fourth pairs of flip-flops (14, 15, 18, 19) in cascade and respectively connected in parallel to the first and second pairs of flip-flops and receiving on their driving inputs and resetting inputs, respectively, signals which are inverted relative to those received by the corresponding inputs of the pair of flip-flops with which each one thereof is associated.

5. Connection interface according to claim 4, characterised in that the outputs of the associated pairs of flip-flops are connected to the inputs of an OR gate (10, 11) whose output is corrected to a control input (D, E) of the multiplexer (6).

6. Connection interface according to any one of claims 2 to 5, characterised in that the storage means and/or the defect indication means (22) comprise lamps (23, 24) connected in the collector circuit of transistors (25, 26) whose bases are connected to the control inputs of the multiplexer so as to indicate the existence of a defect on one and/or the other of the transmission lines.